# EUROPÄISCHE PATENTSCHRIFT

(11) **EP 2 262 984 B1**
(45) Veröffentlichungstag und Bekanntmachung des Hinweises auf die Patenterteilung: **16.05.2012**
(21) Anmeldenummer: 09724853.8
(22) Anmeldetag: 02.03.2009
(51) Int. Cl.: F01N 3/04, F01N 13/14

(54) **ABGAS FÜHRENDES BAUTEIL**
COMPONENT FOR CONDUCTING EXHAUST GAS
ENSEMBLE SERVANT À CONDUIRE DES GAZ D'ÉCHAPPEMENT

(30) Priorität: 22.03.2008 DE 102008015434
(43) Veröffentlichungstag der Anmeldung: 22.12.2010
(73) Patentinhaber: Mahle International GmbH, 70376 Stuttgart (DE)
(72) Erfinder: ELSÄßER, Alfred, Keltern 75210 (DE)
(74) Vertreter: BRP Renaud & Partner
(86) Internationale Anmeldenummer: PCT/EP2009/052443
(87) Internationale Veröffentlichungsnummer: WO 2009/118233

(56) Entgegenhaltungen:
- WO-A-2004/018857
- CH-A5- 626 948
- DE-A1-102005 051 709
- US-A- 3 105 708
- US-A- 3 169 365
- US-A- 4 711 088
- US-A1- 2003 015 126
- US-A1- 2004 083 730
- US-A1- 2007 075 703

## Beschreibung

Die vorliegende Erfindung betrifft ein Abgas führendes Bauteil eines Verbrennungsmotors mit zumindest einer Innenkomponente, die im direkten Kontakt mit dem heißen Abgas steht und zumindest einer Außenkomponente, gemäß dem Oberbegriff des Anspruchs 1. Die Erfindung betrifft außerdem eine, mit einem derartigen Bauteil ausgestattete Brennkraftmaschine, sowie ein mit einer derartigen Brennkraftmaschine ausgestattetes Kraftfahrzeug.

Zur Steigerung der Leistung bzw. der Wirtschaftlichkeit, werden moderne Verbrennungsmotoren zunehmend mit sogenannten Abgasturboladern ausgebildet, welche die Leistung durch die Erhöhung des Gemischdurchsatzes pro Arbeitstakt steigern. Um hierbei insbesondere Abgas führende Teile des Abgasturboladers aus kostengünstigeren Werkstoffen ausbilden zu können, ist es erforderlich, die Eintrittstemperatur der in den Abgasturbolader eintretenden Abgase zu begrenzen. Aus diesem Grund, sind aus dem Stand der Technik bereits dem Abgasturbolader vorgeschaltete Abgaskrümmer bekannt, die eine Kühlfunktion aufweisen und dadurch eine relativ große Temperaturabsenkung der transportierten Abgase bewirken. Hierbei kommen insbesondere wassergekühlte Abgaskrümmer bzw. Abgaskrümmermodule zum Einsatz, welche derzeit als Leichtmetall-Gussteile mit innenliegenden Wasserräumen konzipiert werden. Die dabei entstehende hochkomplexe Formgebung wird üblicherweise mittels Sandkemen realisiert, was jedoch den Gestaltungsspielraum, insbesondere im Hinblick auf die Einhaltung von Minimalwandstärken, einschränkt. Zudem ist hierbei ein aufwändiges Entfernen des Formsandes aus den Hohlräumen zur Erfüllung der Restschmutzanforderungen erforderlich. Generell weisen die im Gussverfahren hergestellten Abgaskrümmer noch den Nachteil auf, das diese insbesondere an den Verbindungsstellen, beispielsweise an Montageflächen in der Regel nachbearbeitet werden müssen und dadurch bezüglich der Herstellung relativ teuer sind.

Aus der US 6,397,589 D1 ist ein Abgaskrümmer bekannt, welcher eine in direktem Kontakt mit dem heißen Abgas stehende Innenkomponente sowie eine diese umgebende Außenkomponente aufweisen. Die Innen- und die Außenkomponente begrenzen dabei einen dazwischen liegenden und Kühlflüssigkeit führenden Raum. Hierbei ist vorgesehen, sowohl die Innenkomponenten als auch die Außenkomponente aus Metall auszubilden und bei der Herstellung miteinander zu verschweißen.

Aus der US 3,324,533 ist ebenfalls ein Abgaskrümmer bzw. ein Abgaskrümmermodul bekannt, dessen Innenkomponente aus Eisen, beispielsweise aus Grauguss, ausgebildet ist, während die Außenkomponente aus faserverstärktem Kunststoff hergestellt ist. Die Außenkomponente ist dabei schalenartig aufgebaut und soll dadurch leicht an der Innenkomponente befestigt werden können. Dabei begrenzen die Innenkomponente und die Außenkomponente einen dazwischen liegenden und Kühlflüssigkeit führenden Raum zur Kühlung des Abgaskrümmermoduls.

Aus der De 102005051709 ist ein Abgaskühler bekannt, dessen Innenkomponente aus Aluminium ausgebildet ist, während die Außenkomponenten aus Kunststoff hergestellt sind.

Die vorliegende Erfindung beschäftigt sich mit dem Problem, für ein Abgas führendes Bauteil der gattungsgemäßen Art, eine verbesserte Ausführungsform anzugeben, die sich insbesondere einerseits durch eine hohe Kühlleistung und andererseits durch geringe Herstellkosten auszeichnet.

Dieses Problem wird erfindungsgemäß durch die Gegenstände der unabhängigen Ansprüche gelöst. Vorteilhafte Ausführungsformen sind Gegenstand der abhängigen Ansprüche.

Die Erfindung beruht auf dem allgemeinen Gedanken, bei einem Abgas führenden Bauteil eines Verbrennungsmotors, eine aus Leichtmetall hergestellte Innenkomponente zu verwenden, welche im direktem Kontakt mit dem heißen Abgas steht sowie eine diese Innenkomponente dicht umgebende und aus Kunststoff ausgebildete Außenkomponente, wobei zwischen der Innen- und der Außenkomponente ein kühlflüssigkeitsführender Raum liegt. Das Abgas führende Bauteil ist somit als Hybrid-Bauteil aus mehreren Werkstoffen aufgebaut, wobei insbesondere die Ausbildung der Außenkomponente aus Kunststoff eine flexible Gestaltung sowie eine deutlich vereinfachte Montage des abgasführenden Bauteils erlauben. Die Außenkomponente wird dabei vorzugsweise in einer Schalenbauweise hergestellt, so dass diese eine Trennebene aufweist, in welcher die zumeist zwei Schalen der Außenkomponente dicht miteinander verbunden werden. Dadurch entfällt eine hochkomplexe und dadurch teure Ausbildung bzw. Formgebung mittels Sandkernen, die zudem den Gestaltungsspielraum stark einschränkt und durch eine aufwändige Entfernung des Formsandes aus den Hohlräumen bzw. durch eine üblicherweise erforderlliche Nachbearbeitung, teuer ist. Die direkt mit dem heißen Abgas in Kontakt stehende Innenkomponente ist aus Leichtmetall, insbesondere aus Aluminium, hergestellt und kann dadurch relativ einfach und kostengünstig, beispielsweise im Druckgussverfahren produziert werden. Aufgrund der Tatsache, dass Aluminium einen deutlich höheren Wärmeleitkoeffizienten aufweist als Stahl, kann mit dem erfindungsgemäßen Abgas führenden Bauteil auch eine verglichen mit Stahlbauteilen relativ hohe Kühlleistung erzielt werden, da die Wärmeübertragung zwischen der Kühlflüssigkeit und dem heißen Abgas vergleichsweise hoch ist. Der Wärmeleitkoeffizient der aus Aluminium hergestellten Innenkomponente beträgt dabei ca. das Dreifache einer aus Stahl hergestellten Innenkomponente.

Bei einer vorteilhaften Weiterbildung der erfindungsgemäßen Lösung, ist die Innenkomponente aus Aluminium-Druckguss ausgebildet. Unter Aluminium-Druckguss versteht man ein Druckgussverfahren, bei dem Aluminium in flüssigem oder teigigem Zustand unter hohem Druck in eine vorgewärmte Stahlform gepresst wird. Dabei verdrängt es die in der Form vorhandene Luft und wird während des Erstarrungsvorganges weiter unter Druck gehalten. Reines Aluminium wird dabei als Gusswerkstoff kaum eingesetzt, da seine Festigkeitseigenschaften für viele Verwendungszwecke ungenügend sind. Erst durch bestimmte Legierungszusätze, hat Aluminium besondere technische Bedeutung als Gusswerkstoff erlangt. Derartige Legierungszusätze sind beispielsweise Silizium, Kupfer, Eisen und/oder Magnesium.

Bei einer weiteren vorteilhaften Ausführungsform der erfindungsgemäßen Lösung, ist ein Anschlussflansch der Innenkomponente radial nach außen gezogen und bildet dabei eine Stirnwand des Flüssigkeit führenden Raums, wobei die Außenkomponente im Bereich eines Radialrandes des Anschlussflansches mit der Innenkomponente verbunden ist. Dies bewirkt den großen Vorteil, dass die aus Kunststoff ausgebildete Außenkomponente nicht direkt mit der mit heißem Abgas beaufschlagten Innenkomponente verbunden werden muss, sondern indirekt über einen radial nach außen und dadurch deutlich kühleren Anschlussflansch. Der Anschlussflansch dient dabei gleichzeitig als Stirnwand des Flüssigkeit führenden Raumes und ist dadurch im Verhältnis zu der übrigen Innenkomponente deutlich kühler, so dass am radialen Randbereich des Außenflansches eine Verbindung mit der aus Kunststoff ausgebildeten Außenkomponente ohne aufwändige und teure Temperaturschutzmaßnahmen für die Außenkomponente möglich ist. Gleichzeitig bietet der aus Leichtmetall, insbesondere aus Aluminium, ausgebildete Anschlussflansch eine stabile Anbindungsmöglichkeit an weitere Bauteile.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und wird in der nachfolgenden Beschreibung näher erläutert, wobei sich gleiche Bezugszeichen auf gleiche oder ähnliche oder funktional gleiche Bauteile beziehen.

Dabei zeigen, jeweils schematisch,
- Fig. 1: eine Ansicht auf ein erfindungsgemäßes Abgas führendes Bauteil in der Art eines Abgaskrümmermoduls,
- Fig. 2: eine Querschnitt durch ein erfindungsgemäßes Abgas führendes Bauteil,
- Fig. 3: eine Darstellung wie in Fig. 2, jedoch bei einem Längsschnitt,
- Fig. 4: einen Längsschnitt durch ein erfindungsgemäßes Bauteil im Bereich eines Zulaufs.

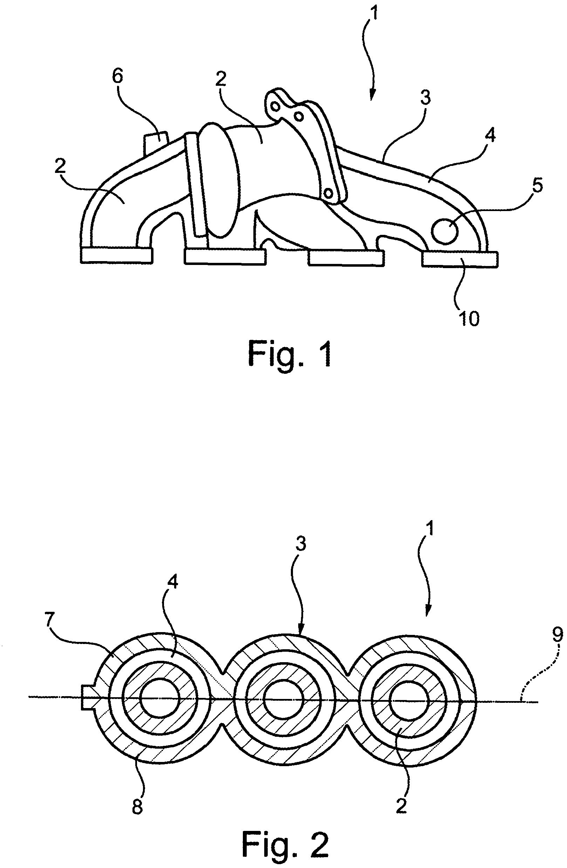

Entsprechend der Fig. 1, weist ein Abgas führendes Bauteil 1, welches hier in der Art eines Abgaskrümmers ausgebildet ist, eine aus Leichtmetall ausgebildete und in direktem Kontakt mit heißem Abgas stehende Innenkomponente 2 sowie eine diese zumindest teilweise und lediglich mit punktierter Linie gezeichnete Außenkomponente 3 auf. Zwischen der Innenkomponente 2 und der Außenkomponente 3 ist dabei ein Kühlflüssigkeit führender Raum 4 angeordnet, welcher über einen ebenfalls mit lediglich punktierter Linie gezeichneten Zulauf 5 mit Kühlflüssigkeit, beispielsweise Kühlwasser versorgt und über einen Ablauf 6 von der Kühlflüssigkeit entsorgt wird.

Erfindungsgemäß ist die Außenkomponente 3 aus Kunststoff ausgebildet, beispielsweise in Schalenbauweise, wodurch ein besonders einfaches Herstellen des erfindungsgemäßen Bauteils 1 möglich ist, da der Kühlflüssigkeit führende Raum 4 nicht wie bisher aufwändig und teuer mit Sandkernen herstellt werden muss. Als Werkstoff für die Innenkomponente 2 kommt dabei insbesondere Aluminium bzw. eine Aluminiumlegierung, in Betracht, so dass die Innenkomponente 2 beispielsweise im Druckguss-Verfahren herstellt werden kann.

Gemäß der Fig. 2, ist dabei der schalenartige Aufbau der Außenkomponente 3 dargestellt, wobei insgesamt zwei Schalenhälften 7 und 8 vorgesehen sind, die über eine Trennebene 9 miteinander verbunden werden. Gut zu erkennen ist gemäß der Fig. 2 der durch die Innenkomponente 2 und die Außenkomponente 3 begrenzte und Kühlflüssigkeit führende Raum 4.

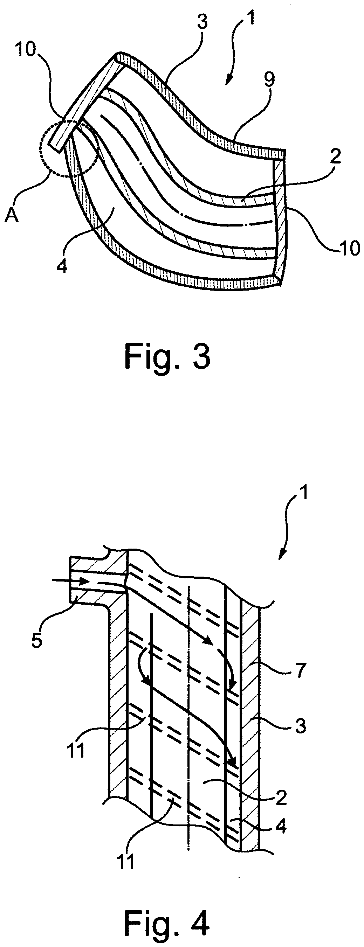

Gemäß den Fig. 1 und 3, ist ein Anschlussflansch 10 der Innenkomponente 2 radial nach außen gezogen und bildet dabei eine Stirnwand des Flüssigkeit führenden Raumes 4. Die aus Kunststoff ausgebildete Außenkomponente 3 ist dabei über einen Umfangsrand mit dem Anschlussflansch 10 der Innenkomponente 2 verbunden, was den großen Vorteil bietet, dass im Verbindungsbereich zwischen dem Anschlussflansch 10 und der Außenkomponente 3 keine die Außenkomponente 3 vor heißen Temperaturen schützende Maßnahmen ergriffen werden müssen, da davon ausgegangen werden kann, dass die auf den Anschlussflansch 10 einwirkende Kühlflüssigkeit den Anschlussflansch 10 soweit abkühlt, dass dieser an seinem Umfangsrand gefahrlos mit der Kunststoffkomponente verbunden werden kann. Selbstverständlich ist auch eine andere Verbindungsart, wie dies beispielsweise in der Detaildarstellung A gezeigt ist, möglich, bei welcher die Außenkomponente 3 nicht mit einem Umfangsrand des Anschlussflansches 10 verbunden wird, sondern mit einem Randbereich der innenliegenden Stirnseite.

Zur Erzielung einer nochmals verbesserten Kühlwirkung, kann innerhalb des Kühlflüssigkeit führenden Raumes 4 zumindest einen Strömungsleitelement 11 vorgesehen sein, wie dies beispielsweise gemäß der Fig. 4 dargestellt ist. Das oder die Strömungsleitelemente 11 sind dabei vorzugsweise einteilig entweder mit der Innenkomponente 2 oder mit der Außenkomponente 3 hergestellt, insbesondere an diese angeformt. Die Strömungsleitelemente 11 verhindern dabei insbesondere die Entstehung so genannter Totwassergebiete, in welchen die Kühlwirkung aufgrund des geringen Kühlflüssigkeitsaustausches beeinträchtigt ist. Gemäß der Fig. 4 bewirken die Strömungsleitelemente 11 beispielsweise eine spiralförmige Strömung um die Innenkomponente 2 herum. Darüber hinaus ist, wie dies gemäß den Fig. 1 und 4 dargestellt ist, ein Zulauf 5 bzw. ein Ablauf 6 für Kühlflüssigkeit an der Außenkomponente 3 vorgesehen, wobei der Zulauf 5 und/oder der Ablauf 6 vorzugsweise direkt an die Außenkomponente 3 angeformt, insbesondere einteilig mit dieser hergestellt sind. Bei einer Ausbildung der Außenkomponente 3 aus Kunststoff, lässt sich ein derartiger Zulauf 5 bzw. ein Ablauf 6 gemeinsam mit der Außenkomponente 3 beispielsweise mittels eines geeigneten Spritzgusswerkzeuges, einfach herstellen.

Durch die Ausbildung des erfindungsgemäßen Bauteils 1 als Hybridbauteil, nämlich mit einer Innenkomponente 2 aus Leichtmetall, insbesondere aus Aluminium, sowie einer zugehörigen Außenkomponente 3 aus Kunststoff, kann eine besonders einfache, das heißt kostengünstige und gleichzeitig bezüglich der Wärmeübertragung äußerst effektive Kühlung erzielt werden, da insbesondere Aluminieinen, um nahezu das dreifache höheren Wärmeleitkoeffizienten als Stahl aufweist. Insbesondere lässt sich mit dem erfindungsgemäßen Bauteil 1 ein aufwändiges Herstellen der Räume 4 mittels Sandkern sowie die hierfür erforderlich Nachbearbeitung und Entfernung des Formsandes vermeiden, wodurch das erfindungsgemäße Bauteil 1 deutlich kostengünstiger am Markt angeboten werden kann.

## Patentansprüche

1. Abgas führendes Bauteil (1) eines Verbrennungsmotors mit zumindest einer Innenkomponente (2), die in direktem Kontakt mit dem heißen Abgas steht und mit zumindest einer Außenkomponente (3), wobei die Innen- und die Außenkomponente (2,3) einen dazwischen liegenden und Kühlflüssigkeit führenden Raum (4) begrenzen, wobei
die Innenkomponente (2) aus Leichtmetall und die Außenkomponente (3) zumindest bereichsweise aus Kunststoff ausgebildet sind, **dadurch gekennzeichnet,**
**dass** ein Anschlussflansch (10) der Innenkomponente (2) radial nach außen gezogen ist und eine Stirnwand des Flüssigkeit führenden Raums (4) bildet, wobei die Außenkomponente (3) im Bereich eines Umfangrandes des Anschlussflansches (10) mit der Innenkomponente verbunden ist.

2. Bauteil nach Anspruch 1,
**dadurch gekennzeichnet,**
**dass** das Abgas führende Bauteil (1) als Abgaskrümmer oder als Teil eines Gehäuses eines Abgasturboladers ausgebildet ist.

3. Bauteil nach Anspruch 1 oder 2,
**dadurch gekennzeichnet,**
**dass** die Innenkomponente (2) aus Aluminium, ausgebildet ist.

4. Bauteil nach einem der Ansprüche 1 bis 3,
**dadurch gekennzeichnet,**
**dass** die Innenkomponente (2) aus Aluminium-Druckguss ausgebildet ist.

5. Bauteil nach einem der Ansprüche 1 bis 4,
**dadurch gekennzeichnet,**
**dass** innerhalb des Kühlflüssigkeit führenden Raumes (4) wenigstens ein Strömungsleitelement (11) angeordnet ist.

6. Bauteil nach Anspruch 5,
**dadurch gekennzeichnet,**
**dass** das wenigstens eine Strömungsleitelement (11) an die Innen- oder an die Außenkomponente (2,3) angeformt, insbesondere einteilig mit dieser hergestellt ist.

7. Bauteil nach einem der Ansprüche 1 bis 6,
**dadurch gekennzeichnet,**
**dass** ein Zulauf (5) und/oder ein Ablauf (6) für Kühlflüssigkeit an der Außenkomponente (3) vorgesehen sind/ist, wobei der Zulauf (5) und/oder der Ablauf (6) vorzugsweise direkt an die Außenkomponente (3) angeformt, insbesondere einteilig mit dieser hergestellt sind/ist.

8. Brennkraftmaschine mit einem Abgas führenden Bauteil (1) nach einem der Ansprüche 1 bis 7,

9. Kraftfahrzeug mit einer Brennkraftmaschine nach Anspruch 8 und/oder mit einem Abgas führenden Bauteil (1) nach einem der Ansprüche 1 bis 7.

## Claims

1. A component (1) for conducting exhaust gas of an internal combustion engine, said component comprising at least one inner component (2) which is in direct contact with the hot exhaust gas, and at least one outer component (3), wherein the inner and the outer component (2, 3) confine a space (4) therebetween which conducts a cooling liquid, wherein
the inner component (2) is made of a light metal and the outer component (3) is made of a plastic at least in some regions, **characterized in**
**that** a connection flange (10) of the inner component (2) is drawn radially outward and forms a front wall of the space (4) conducting a liquid, wherein the outer component (3) is connected in the region of the circumferential rim of the connection flange (10) to the inner component.

2. The component according to claim 1,
**characterized in**
**that** the component (1) for conducting exhaust gas is formed as an exhaust gas manifold or as a part of a housing of an exhaust gas turbocharger.

3. The component according to claim 1 or claim 2,
**characterized in**
**that** the inner component (2) is made of aluminum.

4. The component according to any one of the claims 1 to 3,
**characterized in**
**that** the inner component (2) is made of a die-cast aluminum.

5. The component according to any one of the claims 1 to 4,
**characterized in that** at least one flow guiding element (11) is arranged within the liquid-conducting space (4).

6. The component according to claim 5,
**characterized in**
**that** the at least one flow guiding element (11) is molded onto the inner or the outer component (2, 3), is in particular made in one piece with the latter.

7. The component according to any one of the claims 1 to 6,
**characterized in**
**that** and inlet (5) and/or an outlet (6) for cooling liquid are/is provided on the outer component (3), wherein the inlet (5) and/or the outlet (6) are/is preferably directly molded onto the outer component (3), are/is in particular made in one piece with the latter.

8. An internal combustion engine comprising a component (1) for conducting exhaust gas according to any one of the claims 1 to 7.

9. A motor vehicle comprising an internal combustion engine according to claim 8 and/or a component (1) for conducting exhaust gas according to any one of the claims 1 to 7.

## Revendications

1. Composant de guidage de gaz d'échappement (1) d'un moteur à combustion interne comportant au moins un composant intérieur (2), qui est en contact direct avec le gaz d'échappement chaud et comportant au moins un composant extérieur (3), dans lequel les composants intérieur et extérieur (2,3) délimitent un espace (4) situé entre eux et guidant le liquide refroidissant, dans lequel le composant intérieur (2) est fabriqué en métal léger et le composant extérieur (3) est fabriqué en plastique au moins sur des portions, **caractérisé en ce que** une bride de raccordement (10)du composant intérieur (2) est tirée radialement vers l'extérieur et forme une paroi frontale de l'espace (4) guidant le liquide, dans lequel le composant extérieur (3) est relié au niveau d'un bord circonférentiel de la bride de raccordement (10) avec le composant intérieur.

2. Composant selon la revendication 1,
**caractérisé en ce que**
le composant guidant le gaz d'échappement (1) est réalisé comme un collecteur d'échappement ou comme une partie d'un logement d'un turbocompresseur de gaz d'échappement.

3. Composant selon la revendication 1 ou 2,
**caractérisé en ce que**
le composant intérieur (2) est réalisé en aluminium.

4. Composant selon une des revendications 1 à 3,
**caractérisé en ce que**
le composant intérieur (2) est réalisé en coulée sous pression d'aluminium.

5. Composant selon une des revendications 1 à 4,
**caractérisé en ce que**
au moins un élément de direction d'écoulement (11) est disposé à l'intérieur de l'espace (4) guidant le liquide de refroidissement.

6. Composant selon la revendication 5,
**caractérisé en ce que**
le au moins un élément de direction d'écoulement (11) est façonné sur le composant intérieur ou le composant extérieur (2,3), notamment est fabriqué en un seul tenant avec celui-ci.

7. Composant selon une des revendications 1 à 6,
**caractérisé en ce que**
une conduite d'amenée (5) et/ou une conduite d'évacuation (6) du liquide de refroidissement est/sont prévue(s) sur le composant extérieur (3), dans lequel la conduite d'amenée (5) et/ou la conduite d'évacuation (6) est/sont façonnée(s) de préférence directement sur le composant extérieur (3), notamment fabriquées en un seul tenant avec celui-ci.

8. Moteur à combustion interne comportant un composant (1) guidant le gaz d'échappement selon une des revendications 1 à 7.

9. Véhicule automobile comportant un moteur à combustion interne selon la revendication 8 et/ou comportant un composant (1) guidant le gaz d'échappement selon une des revendications 1 à 7.
